# EUROPÄISCHE PATENTANMELDUNG

(11) **EP 0 945 095 A1**
(43) Veröffentlichungstag der Anmeldung: **29.09.1999**
(21) Anmeldenummer: 99105943.7
(22) Anmeldetag: 24.03.1999
(51) Int. Cl.: A47J 9/00

(54) **Schneidmaschine für pastöse Stoffe**

(30) Priorität: 25.03.1998 DE 19813149
(71) Anmelder: Euro 2000 Patente und Innovationen Henrich GmbH, 87637 Hack bei Seeg (DE)
(72) Erfinder: Henrich, Heinz, 87637 Hack bei Seeg (DE)
(74) Vertreter: Winter, Brandl, Fürniss, Hübner, Röss, Kaiser, Polte, Kindermann Partnerschaft

(57) **Zusammenfassung**

Beschrieben wird eine Schneidmaschine für pastöse Stoffe wie Butter oder dergl., mit einem Behälter (4) zur Aufnahme des Stoffes, einer Vorschubeinrichtung (6) zur Bewegung des Stoffes und einer Schneideinrichtung (8) zum Abtrennen einer Teilmenge von dem durch die Vorschubeinrichtung (6) aus dem Behälter (4) verdrängten Stoff, bei der eine mit der Schneideinrichtung (8) mittelbar oder unmittelbar verbundenen Antriebswelle (22) in den Behälter (4) hineinragt und ein Außengewinde (44) aufweist, das in Gewindeeingriff mit einem auf den Stoff wirkenden Vorschubelement (38) der Vorschubeinrichtung (6) steht.

## Beschreibung

Die Erfindung betrifft eine Schneidmaschine für pastöse Stoffe, beispielsweise Butter oder dergleichen, nach dem Oberbegriff des Anspruches 1.

Schneid- oder Portioniermaschinen für pastöse Stoffe oder plastische Massen, z.B. Butter, Margarine, Pflanzenfette, Käse oder dergleichen, sind aus dem Stand der Technik in einer Vielzahl von Ausgestaltungsformen und seit langem bekannt. Beispiele hierfür sind in der DE-PS 523 535, den DE-ASen 10 24 690 und 11 72 406 sowie der DE-OS 44 12 912 bekannt.

All diesen bekannten Schneid- oder Portioniermaschinen ist gemeinsam, daß der pastöse Stoff in einem Aufbewahrungsbehälter gelagert wird, unter Verwendung einer wie auch immer gearteten Vorschubeinrichtung sukzessive aus dem Behälter herausgeschoben oder verdrängt wird und im Anschluß daran durch eine ebenfalls wie auch immer geartete Schneideinrichtung geschnitten wird, um eine gewünschte Teilmenge des pastösen Stoffes zu erhalten.

Die DE-PS 525 352 zeigt eine Butterschneidmaschine, bei der der Antrieb für die Schneideinrichtung und für den Vorschub durch zwei gekoppelte Antriebswellen erfolgft. Die Antriebswelle für die Schneideinrichtung und die Antriebswelle für den Vorschub-Kolben laufen hierbei außerhalb des Behälters zur Aufnahme des zu schneidenden Stoffes.

Aus der DE-PS 498 691, von welcher die vorliegende Erfindung ausgeht, ist eine Butterteilmaschine bekannt, bei der ebenfalls die Butter in einem Aufbewahrungsbehälter aufgenommen und gelagert ist und hieraus mittels einer Vorschubeinrichtung gefördert werden kann. Die Butter tritt an einem Mundstück aus und wird hier durch eine umlaufende Schneideinrichtung in Form eines Schneiddrahtes portioniert. Der Antrieb der Schneidmaschine erfolgt über eine Handkurbel, welche direkt den nach Art einer Bügelsäge aufgespannten Schneiddraht pro einmaliger Umdrehung einmal an dem Mundstück vorbeibewegt, um einen aus dem Mundstück austretenden Strang abzutrennen oder zu unterteilen. Weiterhin wirkt die Kurbel über eine außerhalb des Behälters im wesentlichen parallel hierzu verlaufende Antriebswelle auf ein Klinkengesperre, welches an einer weiteren Antriebswelle angreift, mit der die Vorschubeinrichtung, welche in Form eines sich im Inneren des Behälters befindlichen Kolbens ausgebildet ist, sukzessive in den Behälter hinein bewegt werden kann, um die sich hierin befindliche Butter aus dem Mundstück zu verdrängen.

Im Falle der DE-PS 498 691 ist somit - wie auch bei den weiter oben genannten vier Druckschriften - eine getrennte Auslegung des Antriebs für die Schneidvorrichtung und den Vorschub vorgesehen.

Dies macht zunächst den Aufbau dieser bekannten Schneidmaschinen in nachteiliger Weise aufwendig, wie sich aus einer Betrachtung der dortigen Figuren unmittelbar ergibt. Speziell im Fall der gattungsbildenden DE-PS 498 691 hat die Schneidmaschine einen komplizierten Aufbau mit der Antriebskurbel für die Schneideinrichtung, der von dieser Antriebskurbel ausgehenden Antriebswelle, welche entlang des Aufbewahrungsgehäuses zu dem Klinkengesperre führt, dem Klinkengesperre selber, welches über eine Verstellvorrichtung an einem Zahnrad derart angreift, daß die pro Kurbelumdrehung geförderte Buttermenge einstellbar wird, so wie einer weiteren Kurbel, mit der der Kolben der Vorschubeinrichtung unabhängig von dem Antrieb durch das Klinkengesperre von seiner untersten Endlage wieder zurück in die Ausgangslage verfahren werden kann etc. Diese Vielzahl von beweglichen, teilweise miteinander in Eingriff befindlichen Teilen mit einer Vielzahl von ein- oder hinterschnittenen Oberflächen macht die gesamte Vorrichtung gemäß der DE-PS 498 691 - wie bereits erläutert - kompliziert im Aufbau, schwierig zu reinigen, was von hygienischen Überlegungen her ebenfalls sehr nachteilig ist, "maschinenartig" in ihrem äußeren Erscheinungsbild, was ihre Verwendung im Privathaushalt oder bei Tisch so gut wie ausschließt und aufgrund der Vielzahl von Einzelelementen teuer in der Herstellung und Wartung.

Die Erfindung hat es sich demgegenüber zur Aufgabe gemacht, ausgehend von der DE-PS 498 691 eine Schneidmaschine für pastöse Stoffe wie Butter oder dergleichen zu schaffen, welche einen robusten und einfachen Aufbau hat, in ihrem Äußeren ästhetisch ansprechend ist und eine exakte Portionierung oder Teilmengenabgabe des Stoffes erlaubt.

Diese Aufgabe wird durch eine Schneidmaschine mit den Merkmalen des Patentanspruchs 1 gelöst.

Erfindungsgemäß ist der Antrieb einer Schneideinrichtung und einer Vorschubeinrichtung in einem Behälter zur Aufnahme des zu schneidenden Stoffes integriert, wobei beide Einrichtungen über eine gemeinsame Antriebswelle betätigt werden. Diese kann den Behälter durchsetzen oder in Form einer Hohlwelle einen Teil der Behälterwandung bilden.

Es stehen somit von dem Behälter keine irgendwie gelagerten, sich entlang des Behälters erstreckenden Wellen oder dergleichen vor. Hierdurch wird es zunächst möglich, das Äußere des Behälters ästhetisch ansprechend, funktionell und ergonomisch zu gestalten.

Darüber hinaus wird durch die Maßnahme, daß die Antriebswelle für die Schneideinrichtung gleichzeitig in Gewindeeingriff mit dem Vorschubelement der Vorschubeinrichtung steht, die Möglichkeit geschaffen, mit einem Minimum an beweglichen, miteinander in Eingriff stehenden Bauelementen auszukommen. Hierdurch wiederum wird die Funktionssicherheit erhöht. Weiterhin ist hierdurch die erfindungsgemäße Schneidmaschine leicht zu zerlegen und zu reinigen, einzelne Elemente, wie beispielsweise die Schneideinrichtung, können rasch ausgetauscht werden, die Abgabe von beliebigen Teilmengen ist möglich und aufgrund der geringen Anzahl von miteinander in Eingriff stehenden und daher entsprechend präzise gefertigten Einzelelementen läßt sich die erfindungsgemäße Schneidmaschine kostengünstig herstellen.

Die letztgenannte Variante mit der Hohlwelle als Antriebswelle stellt im weitesten Sinne eine kinematische Umkehr des Ausführungsbeispiels mit einer den Behälter durchsetzenden Antriebswelle dar: durch Festhalten des Griffteils und durch Drehen des als Hohlwelle ausgeführten Gehäuses gegenüber dem Griffteil und damit gegnüber der Haltevorrichtung erfolgt ebenfalls eine Zustellbewegung des Vorschubelementes aufgrund des direkten oder indirekten Gewindeeingriffs zwischen Behälter und Vorschubelelement, so daß der zu schneidende Stoff gegen die Schneideinrichtung geführt wird.

Vorteilhafte Ausgestaltungen der Erfindung sind Gegenstand der jeweiligen Unteransprüche.

Weitere Einzelheiten, Aspekte und Vorteile der vorliegenden Erfindung ergeben sich aus der nachfolgenden Beschreibung einer als illustrativ und nicht einschränkend zu verstehenden Ausführungsform anhand der Zeichnung.

Es zeigt:
Fig. 1 in Schnittdarstellung eine Ausgestaltungsform einer erfindungsgemäßen Schneidmaschine gemäß einer ersten Ausführungsform;
Fig. 2 schematisch vereinfacht einen Querschnitt durch den Behälter der Schneidmaschine von Fig. 1 zur Darstellung der Vorschubeinrichtung;
Fig. 3 eine Fig. 2 entsprechende Schnittdarstellung durch den Behälter von Fig. 1 in einer anderen Ebene zur Veranschaulichung der Haltemittel;
Fig. 4 eine Ansicht auf eine axial außerhalb der Schneideinrichtung anzuordnende scheibensegmentförmige Abdeckung;
Fig. 5 eine Fig. 4 entsprechende Ansicht der kreisförmigen Scheibe der Schneideinrichtung;
Fig. 6 in Schnittdarstellung eine Ausgestaltungsform einer erfindungsgemäßen Schneidmaschine gemäß einer zweiten Ausführungsform;
Fig. 7 in Schnittdarstellung die Ausgestaltungsform gemäß der zweiten Ausführungsform, jedoch gegenßüber der Darstellung von Fig. 7 um 90° gedreht; und
Fig. 8 eine perspektivische Ansicht von schräg unten auf die Haltevorrichtung in der zweiten Ausführungsform.

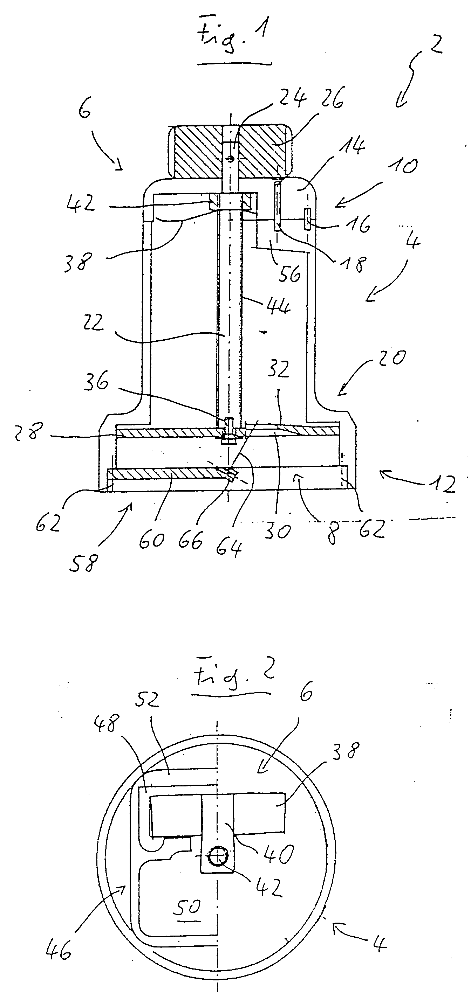

Eine in der Zeichnung insgesamt mit 2 bezeichnete Schneidmaschine gemäß einer ersten Ausführungsform der vorliegenden Erfindung ist in ihrer Gesamtheit in Fig. 1 in Schnittdarstellung veranschaulicht und umfaßt im wesentlichen einen Behälter 4 zur Aufnahme eines pastösen Stoffes, beispielsweise Butter oder dergleichen, wie nachfolgend noch näher erläutert werden wird, eine Vorschubeinrichtung 6 zur Bewegung des Stoffes im Inneren des Behälters 4 und eine Schneideinrichtung 8 zum Abtrennen einer Teilmenge von dem durch die Vorschubeinrichtung 6 aus dem Behälter 4 verdrängten Stoff.

Der Behälter 4 weist gemäß der Zeichnung im wesentlichen Zylinderform auf mit einem oberen Endabschnitt 10 und einem unteren Endabschnitt 12. Der obere Endabschnitt 10 ist mit einem Deckelelement 14 versehen, welches gegenüber dem Behälter 4 mit einem oder mehreren Zentrierstiften 16, sowie einer oder mehreren Fixierschrauben 18 lagefixiert ist.

Der untere Endabschnitt 12 des Behälters 4 weist einen Absatz oder eine Stufe 20 auf, in der sich der Behälter 4 radial nach außen glockenförmig erweitert, wie am besten aus Fig. 1 hervorgeht. In diesem erweiterten oder aufgeweiterten unteren Endabschnitt 12 ist die Schneideinrichtung 8 angeordnet.

Im Inneren des Behälters 4 und im wesentlichen koaxial zu der Längsmittelachse des zylindrischen Behälters 4 verlaufend ist eine Antriebswelle 22 angeordnet. Die Antriebswelle 22 steht mit ihrem in Fig. 1 unteren Ende mit der Schneideinrichtung 8 in Verbindung und verläuft sodann über die gesamte Längserstreckung des Behälters 4 in Fig. 1 nach oben in Richtung des Deckelelementes 14, durchsetzt dieses Deckelelement 14 in einer Bohrung 24 und steht nach außen über die Oberseite des Deckelelementes 14 vor. Auf diesen freien, vom Deckelelement 14 vorstehenden Endabschnitt 24 der Antriebswelle 22 ist eine Drehhandhabe 26 aufgesetzt, beispielsweise ein Rad mit einer geriffelten oder gekerbten Außenumfangsoberfläche. Durch Drehung an der Drehhandhabe 26 ist die Antriebswelle 22 in eine entsprechende gleichsinnige Drehung versetzbar.

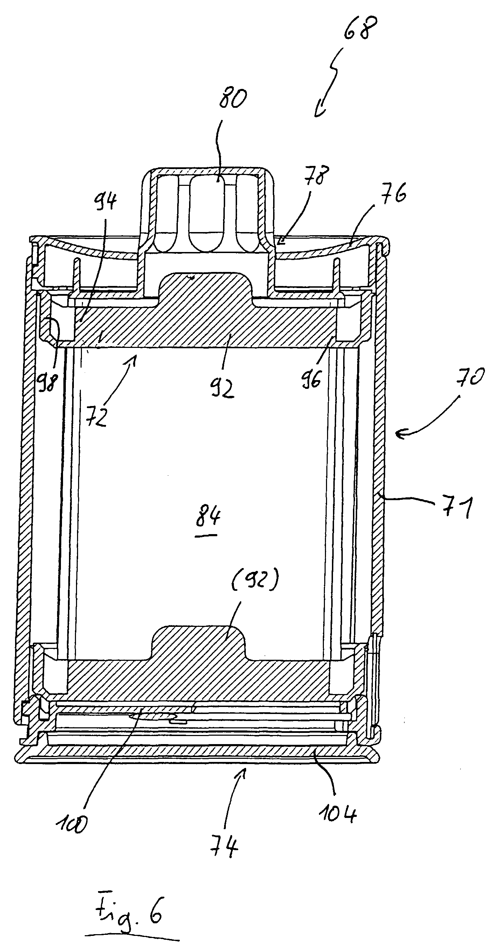

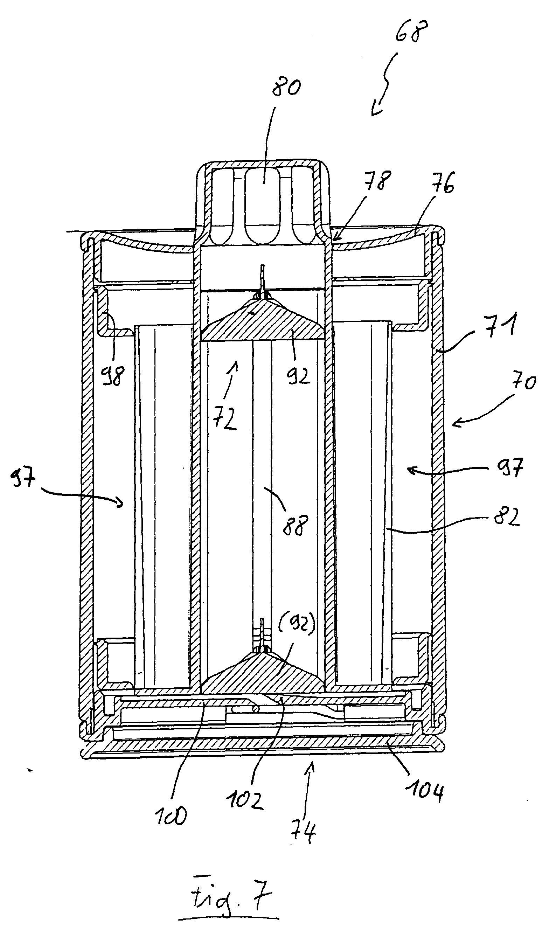

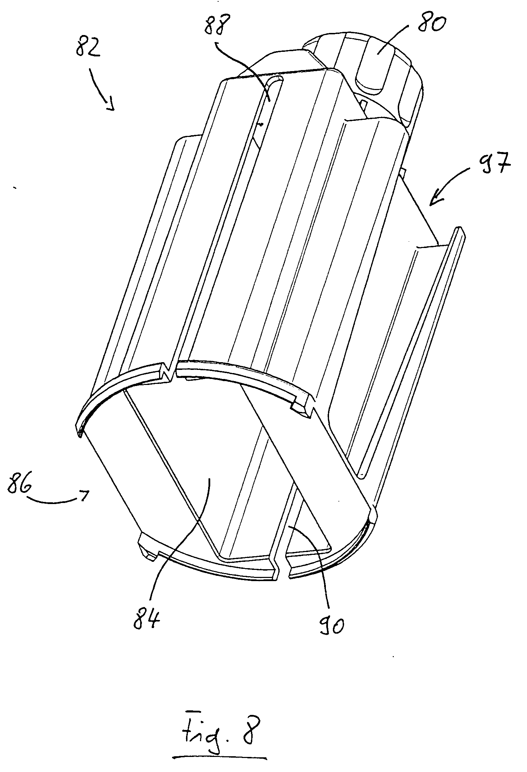

Die Schneideinrichtung 8 besteht gemäß den Figuren 1 und 5 allgemein gesagt aus einer im wesentlichen kreisförmigen Scheibe 28, wobei diese Scheibe 28 eine sich in Radialrichtung keilförmig erweiternde Unterbrechung 30 aufweist, wobei weiterhin eine Schneidklinge 32 an einer Kante der Unterbrechung 30 ausgebildet ist. Wie am besten aus Fig. 1 hervorgeht, ist hierbei die Schneidklinge 32 zur Ebene der Scheibe 28 parallel in Richtung des Innenraums des Behälters 4 versetzt, was dadurch bewerkstelligt wird, daß die die Schneidklinge 32 tragende Kante der Unterbrechung 30 in Fig. 1 nach oben in Form eines liegenden S angehoben ist.

Die die Schneideinrichtung 8 bildende Scheibe 28 ist an dem der Drehhandhabe 26 abgewandten Ende der Antriebswelle 22 über geeignete Mittel drehfest angeordnet, beispielsweise dadurch, daß das untere Ende der Antriebswelle 22 vier- oder mehreckig ausgebildet ist und in eine entsprechende vier- oder mehreckige Ausnehmung 34 im Drehmittelpunkt der Scheibe 28 eingreift. Die endgültige Lagefixierung erfolgt dann über eine Schraube 36.

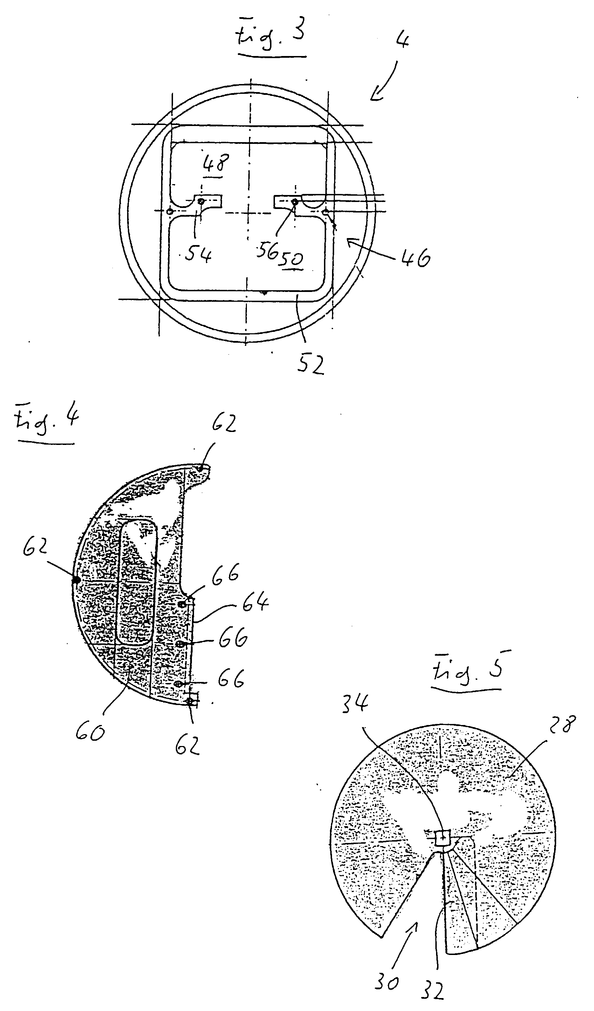

Wie weiterhin aus den Figuren 1 und 2 hervorgeht, befindet sich im Inneren des Behälters 4 zwischen der Drehhandhabe 26 bzw. dem Deckelelement 14 und der Scheibe 28 der Schneideinrichtung 8 die Vorschubeinrichtung 6. Diese Vorschubeinrichtung 6 weist ein Vorschubelement 38 auf, welches im wesentlichen rechteckig-plattenförmig ist und an einem mittigen Ausleger 40 befestigt ist, der seinerseits an einer Gewindehülse oder Mutter 42 befestigt ist, deren Innengewinde mit einem Außengewinde 44 in Eingriff steht, welches am Außenumfang der Antriebswelle 22 ausgebildet ist. Das Vorschubelement 38 ist bevorzugt aus einer Federstahlplatte gefertigt und weist in der Seitenansicht gemäß Fig. 1 nicht geradlinig/gestreckten Verlauf, sondern eine sich in Richtung des Auslegers 40 hin nach oben erstreckende leicht konvexe Formgebung auf, wobei der Scheitel der konvexen Kontur mit der Befestigungsstelle zwischen dem Ausleger 40 und dem Vorschubelement 38 im wesentlichen zusammenfällt, bzw., wenn Vorschubelement 38 und Ausleger 40 einstückig aus einem einzigen Federblechteil gestanzt wurden, mit der Stelle der Ausbildung des Auslegers 40 an dem Vorschubelement 38 zusammenfällt.

Im Inneren des Behälters 4 befinden sich gemäß den Figuren 2 und 3 weiterhin Haltemittel 46 zur Lagerung von bevorzugt handelsüblich konfektionierten Mengeneinheiten des pastösen Stoffes, also beispielsweise Butter in Block- oder Rollenform handelsüblicher Größe. Im in Fig. 2 und 3 dargestellten Ausführungsbeispiel definieren die Haltemittel 46 zwei Aufnahmekammern 48 und 50, welche dann jeweils zur Aufnahme einer Mengeneinheit des pastösen Stoffes dienen, das heißt, in diesem Ausführungsbeispiel ist der Behälter 4 in der Lage, zwei handelsüblich konfektionierte Mengeneinheiten, also beispielsweise zwei Blöcke von Butter a' 125 Gramm oder dergleichen aufzunehmen.

Wie weiterhin aus den Figuren 2 und 3 hervorgeht, weisen die Haltemittel 46, welche in Form eines in dem Behälter ausgebildeten oder in diesem eingesetzten Rahmen 52 ausgebildet sind, im Querschnitt gemäß den Figuren 2 und 3 zwei Vorsprünge 54 und 56 auf, welche jeweils an zwei einander gegenüberliegenden Seiten des Rahmes 50 ausgebildet sind und sich aufeinander zu in Richtung auf die Längsmittelachse des Behälters 4 erstrecken. Zwischen den beiden freien Endabschnitten der Vorsprünge 54 und 56 verläuft dann die Antriebswelle 22. Hierdurch wird sichergestellt, daß die Antriebswelle 22 nicht mit den sich in den Aufnahmekammern 48 und 50 befindlichen pastösen Stoff in Berührung kommt.

Wie weiterhin aus Fig. 2 erkennbar, ist zwischen dem Rahmen 52 und der durch die Vorsprünge 54 und 56 definierten Aufnahmekammer 48 das Vorschubelement 38 gehalten. Aufgrund der Anlage des Vorschubelementes 38 an dem Rahmen 52 ist dieses gegenüber dem Rahmen 52 und damit gegenüber dem Gehäuse 4 im wesentlichen drehfest, jedoch axial in Längsrichtung des Gehäuses 4 verschiebbar.

Diese Axialbewegung oder diese axiale Versetzung der Vorschubeinrichtung 6 bzw. des Vorschubelementes 38 entlang der Antriebswelle 22 erfolgt über den Gewindeeingriff zwischen der Mutter 42 und dem Außengewinde 44 auf der Antriebswelle 22. Mit anderen Worten, wird die Antriebswelle 22 über die Drehhandhabe 26 in Drehung versetzt, bewegt sich die Mutter 42 aufgrund der drehfesten Lagerung des Vorschubelementes 38 relativ zu dem Gehäuse 4 und damit das Vorschubelement 38 linear entlang der Antriebswelle 22 in Fig. 1 nach oben oder unten abhängig von der Drehrichtung der Antriebswelle 22.

Nachfolgend sollen - weiterhin unter Bezugnahme auf die Zeichnung - Funktions- und Arbeitsweise der so aufgebauten Schneidmaschine 2 näher erläutert werden:

Die Drehhandhabe 26 wird von dem oberen freien Ende der Antriebswelle 22 - gegebenenfalls nach Lösen entsprechender Befestigungsmittel - abgezogen, wonach dann die Schraube 18 oder die Schrauben 18 gelöst werden, welche das Deckelelement 14 mit dem Behälter 4 verbinden. Wie aus den Figuren 1 und 3 hervorgeht, sind sowohl die Schrauben 18, als auch die Stifte 16 in entsprechenden Gegengewinden bzw. -bohrungen gehalten, welche in den Vorsprüngen 54 und 56 ausgebildet sind. Nachdem das Deckelelement 14 abgenommen worden ist, wird der pastöse Stoff, beispielsweise Butter in Block- oder Rollenform in die Aufnahmekammern 48 und 50 eingeführt, bis der Stoff auf der Scheibe 28 der Schneideinrichtung 8 aufsitzt. Sodann wird das Deckelelement 14 wieder aufgesetzt und mit den Schrauben 18 fixiert und die Drehhandhabe 26 wird am oberen freien Endabschnitt der Antriebswelle 22 befestigt.

Wird nun die Drehhandhabe 26 in eine entsprechende Richtung gedreht, wird durch diese sich auf die Antriebswelle 22 übertragende einzelne Drehbewegung ein gepaarter Bewegungsablauf initiiert, nämlich zum einen eine Drehung der Scheibe 28 der Schneideinrichtung 8, sowie eine relative axiale Versetzung der Gewindehülse oder Mutter 42 des Vorschubelementes 38 entlang der Antriebswelle 22, so daß das Vorschubelement 38 in der Aufnahmekammer 48 in Fig. 1 nach unten bewegt wird. (Es versteht sich, daß ein dem Vorschubelement 38 entsprechendes weiteres Vorschubelement für die Aufnahmekammer 50 bzw. den sich hierin befindlichen pastösen Stoff vorhanden ist. Dieses weitere Vorschubelement kann identisch zu dem Vorschubelement 38 sein, jedoch zu dessen Anordnung gemäß Fig. 2 um 180° nach unten verdreht auf der Antriebswelle 22 sein, oder aber - und dies stellt die bevorzugte Ausführungsform dar - der Ausleger 40 ist in Fig. 2 nach unten in die Aufnahmekammer 50 hinein verlängert und trägt dort ein in der Aufnahmekammer 50 quer verlaufendes, dem Vorschubelement 38 entsprechendes weiteres Vorschubelement.)

Durch diese nach unten gerichtete Bewegung der Vorschubeinrichtung 6 entlang der Antriebswelle 22 wird auf den sich in den Aufnahmekammern 48 und 50 befindlichen pastösen Stoff Druck ausgeübt, der diesen Stoff gegen die Scheibe 28 bzw. Schneidklinge 32 der Schneideinrichtung 8 drückt. Aufgrund der gleichzeitig mit der Vorschubbewegung der Vorschubeinrichtung 6 einhergehenden Drehbewegung der Scheibe 28 erfolgt durch deren Schneidklinge 32 ein entsprechender Abtrag von der an der Scheibe 28 anliegenden Oberfläche das pastösen Stoffes, so daß dieser pastöse Stoff durch die Unterbrechung 30 in der Scheibe 28 aus dem unteren Endabschnitt 12 bzw. einer dortigen Öffnung 58 austreten kann. Ist der pastöse Stoff in dem Behälter 4 bzw. den dortigen Aufnahmekammern 48 und 50 beispielsweise Butter, werden bei Drehung der Drehhandhabe 26 von der Öffnung 58 der Schneidmaschine 2 je nach Größe des Drehbetrages Butterflocken oder -locken abgegeben, welche dann entsprechend weiterverarbeitet werden können, beispielsweise zu Dekorationszwecken, als Brotaufstrich etc.

Um einen stets gleichmäßigen Abtrag durch die Schneideinrichtung 8 und damit eine im wesentlichen gleichförmige Dicke der von dem pastösen Stoff abgetrennten Teilmengen zu erzielen, ist die Ausbildung bzw. Abstimmung zwischen dem Gewindeeingriff der Mutter 42 mit dem Außengewinde 44 und der Abtragsrate durch die Schneidklinge 32 derart, daß bei einer vollen Umdrehung der Drehhandhabe 26 entsprechend einer vollen Umdrehung der Antriebswelle 22 und eines vollen Umlaufes der Schneidklinge 32 der von der Vorschubeinrichtung 6 erzielte Vorschub, das heißt der Betrag der Bewegung des Vorschubelementes 38 relativ zu der Antriebswelle 22 gleich der Versetzung der Schneidklinge 32 zur Ebene der Scheibe 28 parallel in Richtung Innenraum des Behälters 4. Mit anderen Worten, der von einem vollen Umlauf der Schneidklinge 32 von dem pastösen Stoff abgetrennte Höhen- oder Dickenbetrag wird durch eine im wesentlichen gleich bemessene Zustellbewegung der Vorschubeinrichtung 6 ausgeglichen, so daß sichergestellt ist, daß die Schneidklinge 32 weder aufgrund eines zu geringen Vorschubs oder einer zu geringen Zustellbewegung seitens der Vorschubeinrichtung 6 leer umläuft oder "schmiert", noch aufgrund einer zu hohen Vorschub- oder Zustellbewegung verstopft oder blockiert wird oder unsauber schneidet oder abträgt.

Wie weiterhin aus Fig. 1 hervorgeht, ist axial außerhalb der Schneideinrichtung 8, d.h. in der Darstellung von Fig. 1 unterhalb der Scheibe 28 in dem aufgeweiteten Endabschnitt 12 eine scheibensegmentförmige Abdeckung 60 im Abstand zur Schneideinrichtung 8 bzw. deren Scheibe 28 angeordnet. Die Abdeckung hat hierbei die in Fig. 4 dargestellte Halbscheiben- oder Halbmondform und deckt somit das axial außerhalb der Scheibe 28 liegende offene Ende oder die Öffnung 58 des Behälters 4 im wesentlichen zur Hälfte ab. Die Befestigung der Abdeckung 60 im Bereich der Öffnung 58 des Behälters 4 erfolgt z.B. über eine Mehrzahl von Schrauben 62.

An einer geraden Kante der Abdeckung 60 mit einer im wesentlichen dem Radius der Abdeckung 60 entsprechenden Länge ist eine Abstreifklinge 64 angeordnet, welche mit der zur Außenseite des Behälters 4 weisenden Oberfläche oder Unterseite der Scheibe 28 in Gleitanlage ist. Die Befestigung der Abstreifklinge 64 erfolgt beispielsweise durch eine Mehrzahl von Madenschrauben 66, welche einen Endabschnitt der Abstreifklinge durchtreten und in das Material der Abdeckung 60 eingeschraubt sind.

Durch die Abstreifklinge wird eine von der Schneidklinge 32 abgetrennte Teilmenge des pastösen Stoffes, welche durch die Unterbrechung 30 in Richtung der Öffnung 58 des Behältres 4 austritt und welche eventuell an der Unterseite der Scheibe 28 anhaftet, von dieser Unterseite abgestreift, um eine saubere Abgabe der gewünschten Teilmenge(n) zu erzielen.

Ist die gewünschte Teilmenge des pastösen Stoffes in dem Behälter 4 von der Öffnung 58 abgegeben worden, wird die Drehung der Drehhandhabe 26 eingestellt, so daß von der Schneidklinge 32 kein Abtrag und von der Vorschubeinrichtung 6 keine Zustellbewegung mehr erzeugt wird. Die Schneidmaschine 2 kann dann aus der Hand gelegt und abgestellt werden, wobei der sich glockenförmig erweiternde Endabschnitt 12 benachbart der Öffnung 58 eine sicher Standfläche bietet.

Durch die erfindungsgemäße Schneidmaschine 2 ist somit der pastöse Stoff hygienisch verpackt bzw. bevorratet und es kann jederzeit die gewünschte Teilmenge durch eine oder mehrere Umdrehungen der Drehhandhabe 26 entnommen werden. Aufgrund der gleichzeitigen Erzeugung der Schneid- und Zustellbewegung durch eine einzige Drehhandhabe 26 kann die gesamte Schneidmaschine 2 das in der Zeichnung dargestellte kompakte und ästhetisch ansprechende Äußere haben mit einer geringen Anzahl von relativ zueinander beweglichen oder miteinander sich in Eingriff befindlichen Teilen, so daß Herstellungskosten verringert, die Lebensdauer verbessert und die Handhabung vereinfacht sind. Das ästhetisch gefällige Äußere der Schneidmaschine 2 erlaubt eine ständige Bevorratung von pastösen Stoffen, beispielsweise Butter oder dergleichen und auch ein Plazieren der Schneidmaschine 2 bei Tisch, da besonders augenfällige Unterschiede zu beispielsweise einer Pfeffermühle nicht gegeben sind.

Für Reinigungs- und/oder Nachfüllzwecke kann durch Lösen der Schraube 36 die Scheibe 28 vom unteren Ende der Antriebswelle 22 abgenommen werden. Ebenso kann - wie bereits weiter oben erläutert - nach Enfernen der Drehhandhabe 26 das Deckelelement 14 von dem Behälter 4 abgenommen werden. Der gesamte Innenraum des Behälters 4 ist sodann von oben her im wesentlichen ungehindert für Reinigungszwecke und einen sich darin anschließenden Nachfüllvorgang zugänglich.

Es versteht sich, daß die voranstehende Beschreibung einer bevorzugten Ausführungsform als rein illustrativ und nicht einschränkend zu verstehen ist. Im Rahmen der vorliegenden Erfindung ist eine Vielzahl von Modifikationen oder Abwandlungen möglich, ohne von der Lehrer der vorliegenden Erfindung abzuweichen.

So kann beispielsweise anstelle der rotationssymmetrischen Ausgestaltung des Behälters 4 mit der axial mittig verlaufenden Antriebswelle 22 und den beiden beidseitig der Antriebswelle 22 angeordneten Aufnahmekammern 48 und 50 die Drehachse der Antriebswelle 22 außermittig im Bereich der Umfangswand des Behälters 4 angeordnet werden. Anstelle der beiden Aufnahmekammern 48 und 50 steht dann entweder eine in ihrem Volumen den beiden Aufnahmekammern 48 und 50 entsprechende größere Aufnahmekammer im Inneren des Behälters 4 zur Verfügung, oder aber der Behälter 4 wird im Durchmesser kleiner gemacht, um nur noch ein Volumen entsprechend der Aufnahmekammer 48 oder 50 bereitzustellen. Die Scheibe 28 der Schneideinrichtung 8 wäre dann in dem unteren Endabschnitt 12 auf geeignete Weise drehbar zu lagern und der Antrieb der Scheibe 28 über die Antriebswelle 22 könnte dann beispielsweise über eine an der Scheibe 28 ausgebildeten Außenverzahnung oder dergleichen erfolgen.

Anstelle der Ausbildung der Klinge in einer sich drehenden Scheibe kann auch - eine entsprechende Anpassung oder Auslegung der Kombination aus Klingenbetätigungsmechanismus und Vorschub vorausgesetzt - eine andere Klingenausbildung oder -anordnung vorgesehen werden, beispielsweise eine exzentrisch direkt oder indirekt angetriebene Klinge welche eine Art "Sensenschnitt" durchführt.

Ist eine exakte Bemessung oder Dosierung der von der Schneideinrichtung zu erzeugenden Teilmenge beabsichtigt oder gewünscht, kann ein Schrittantrieb beispielsweise nach Art eines Malteserkreuzantriebes oder dergleichen vorgesehen werden, der bei einer im weitesten Sinne beliebig weiten Drehung der Drehhandhabe 26 nur einen ganz bestimmten Drehbetrag der Scheibe 28 und Zustellbetrag der Vorschubeinrichtung 6 erlaubt, so daß ungeachtet beispielsweise einer viertelten, halben oder dreiviertelten Umdrehung der Drehhandhabe 26 stets ein und dergleiche Teilmengenbetrag des pastösen Stoffes von der Schneideinrichtung abgetrennt und von der Öffnung 58 abgegeben wird.

Weiterhin versteht sich, daß die konkrete Formgebung des Behälters 4 und der Drehhandhabe 26 nicht auf das dargestellte Ausführungsbeispiel beschränkt sind.

Es ist im Rahmen der vorliegenden Erfindung weiterhin auch möglich, quasi eine kinematische Umkehr der in Fig. 1 dargestellten Ausführungsform bereitzustellen, bei der die Scheibe 28 drehfest gelagert ist und über Drehung einer entsprechend angeordneten Drehhandhabe der Behälter 4 mit dem sich hierin befindlichen pastösen Stoff gegenüber der Scheibe 28 in Drehung versetzt wird, wobei gleichzeitig wieder eine entsprechende Zustellbewegung über die Vorschubeinrichtung 6 erzielt wird.

In den Figuren 6 bis 8 ist eine zweite Ausführungsform einer erfindungsgemäßen Schneidmaschine näher dargestellt. Die Schneidmaschine gemäß der zweiten Ausführungsform ist insgesamt mit dem Bezugszeichen 68 versehen und umfaßt im wesentlichen ein bevorzugt zylinderförmiges Gehäuse oder einen Behälter 70 mit einer umlaufenden Behälterwand 71, eine in dem Behälter 70 angeordnete Vorschubeinrichtung 72, sowie eine am unteren Ende des Behälters 70 befindliche Schneideinrichtung 74.

Die Vorschubeinrichtung 72 ist in den Figuren 6 und 7 in ihren beiden Extremlagen gezeigt, nämlich einmal in der oberen Extrem- oder Ausgangslage und der unteren Extrem- oder Endlage, wo sich die Vorschubeinrichtung 72 unmittelbar benachbart der Schneideinrichtung 74 befindet.

Das obere, der Schneideinrichtung 74 abgewandte Ende des Behälters 70 ist mit einem Deckel 76 verschlossen, wobei der Deckel 76 eine mittige Öffnung 78 aufweist, durch welche ein Griffteil 80 mittig von dem Behälter 70 aus vorsteht. Das Griffteil 80 ist gemäß den Figuren 6 bis 8 Teil einer Haltevorrichtung 82, welche sich ebenfalls in dem Behälter 70 befindet und zur Aufnahme von handelsüblich konfektionierten Mengeneinheiten des zu schneidenden Stoffes dient.

Hierzu weist die Haltevorrichtung 82 gemäß Fig. 8 einen Aufnahmeraum 84 auf, der sich von einem unteren, der Schneideinrichtung benachbarten Ende 86 der Haltevorrichtung 82 bis nach oben in den Bereich des Griffteils 80 erstreckt. Die Dimensionierung des Aufnahmeraums 84 ist hierbei beispielsweise so gewählt, daß ein 125 g-Stück Butter ohne Umformung oder Zerteilung aufgenommen werden kann. Selbstverständlich ist die Form des Aufnahmeraums 84 nicht auf die in Fig. 8 gezeigte rechteckförmige Grundrißform beschränkt, sondern es sind auch andere Formgebungen denkbar beispielsweise quadratische oder runde. Auch können mehrere Haltevorrichtungen 82 vorgesehen sein, welche jeweils gleiche äußere Formgebung und Größe haben, sich jedoch in der Ausgestaltung des Aufnahmeraums 84 unterscheiden, so daß unterschiedlichen Verpackungsgrößen und/oder Verpackungsformen unterschiedlicher zu schneidender Stoffe Rechnung getragen werden kann.

Wie weiterhin am besten aus den Figuren 7 und 8 hervorgeht, weist die äußere Umfangswand der Haltevorrichtung 82 um 180° beabstandete Längsschlitze 88 und 90 auf, welche sich von einem oberen Endabschnitt der Haltevorrichtung 82 benachbart dem Griffteil 80 bis zu dem unteren Ende 86 erstrecken und hier offen münden. Die Längsschlitze 88 und 90 dienen zur Führung der Vorschubeinrichtung 72, wie am besten aus den Figuren 6 und 7 hervorgeht. Hierzu weist das im Grundriß rechteck/plattenförmige Vorschubelement 92 der Vorschubeinrichtung 72 zwei seitliche Stege 94 und 96 auf, wobei der Steg 94 den Längsschlitz 88 und der Steg 96 den Längsschlitz 90 durchsetzt. Das Vorschubelement 92 erstreckt sich somit mit seinen Stegen 94 und 96 durch die Längsschlitze 88 und 90 aus dem Inneren der Haltevorrichtung 82 heraus nach außen in Richtung auf den inneren Umfang des Behälters 70 bzw. dessen Wand 71.

Gegenüber den Längsschlitzen 88 und 90 jeweils in Umfangsrichtung um 90° versetzt sind am Außenumfang der Haltevorrichtung 82 Aufnahmen 97 ausgebildet. Diese Aufnahmen 97 dienen zur Aufnahme von Kühlmitteln, beispielsweise sogenannten Kühlakkus, Kühlbeuteln, Trocken- oder Wassereis etc., um den sich im Inneren der Haltevorrichtung im dortigen Aufnahmeraum 84 befindlichen Stoff über längere Zeit kühl und damit im Falle von z.B. Butter fest und schneidfähig zu halten.

Ein äußerer umfangsseitig umlaufender Randabschnitt 98 des Vorschubelementes 92 weist ein (in der Zeichnung nicht näher dargestelltes) Außengewinde auf, welches mit einem (in der Zeichnung ebenfalls nicht näher dargestellten) Innengewinde am Innenumfang der Behälterwand 71 des Behälters 70 in Eingriff steht.

Die Schneideinrichtung 74 ist im wesentlichen so aufgebaut wie die Schneideinrichtung 8 der ersten Ausführungsform, d. h. sie umfaßt eine Scheibe 100, welche jedoch im Gegensatz zur ersten Ausführungsform drehfest am unteren Ende des Behälters 70 mit diesem verbunden ist. In der Scheibe 100 befindet sich eine Unterbrechung oder Ausnehmung im wesentlichen analog zu der Unterbrechung 30 der ersten Ausführungsform, wobei eine Kante dieser Unterbrechung eine Klinge 102 aufweist, wie am besten aus Fig. 7 ersichtlich ist. Im übrigen sei festzuhalten, daß die die Schneideinrichtung 8 betreffenden Angaben aus der ersten Ausführungsform im wesentlichen auch hier bei der zweiten Ausführungsform zutreffen.

Das untere Ende der Schneidmaschine 68 im Bereich der Schneideinrichtung 74 ist durch einen abnehmbaren Deckel 104 verschließbar, der während der Nichtbenutzung der Schneidmaschine 68 dieses untere Ende luftdicht abschließt und so das Eindringen von Feuchtigkeit, Staub, Keimen etc. verhindert.

Die Arbeits- oder Funktionsweise der zweiten Ausführungsform gemäß den Figuren 6 bis 8 ist im wesentlichen wie folgt:

Bei abgenommenem Deckel 76 wird die Haltevorrichtung 82 aus dem Behälter 70 entnommen, wobei das Vorschubelement 92 bzw. seine beiden seitlichen Stege 94 und 96 aus den offenen Längsschlitzen 88 und 90 der Haltevorrichtung 82 herausgleiten können, so daß letztere von der Vorschubeinrichtung 72 abgezogen werden kann. Die Vorschubeinrichtung 72 ist nun von oben her zugänglich und kann aus dem Behälter 70 herausgeschraubt und anschließend wieder in den Aufnahmeraum bzw. die Haltevorrichtung 82 eingesetzt werden. In den Aufnahmeraum 84 wird nun der zu schneidende Stoff, beispielsweise ein Butterblock eingelegt, wobei das Vorschubelement 92 von dem Stoff vollständig in die Haltevorrichtung 82 eingeschoben wird und hierbei die Stege 94 und 96 entlang der Längsschlitze 88 und 90 gleiten und das Vorschubelement 92 der Vorschubeinrichtung 72 in Richtung des Griffteils 80 rutscht. Weiterhin werden bei Bedarf in eine oder beide seitlichen Aufnahmen 97 geeignete Kühlmittel eingesetzt. Im Anschluß daran wird die Haltevorrichtung 82 wieder in den Behälter 70 eingeführt und der Deckel 76 verschlossen, so daß das Griffteil 80 aus der Öffnung 78 vorsteht. Beim Einführen der Haltevorrichtung 82 in den Behälter 70 gelangen das Außengewinde an dem umlaufenden Rand 98 des Vorschubelementes 92 und das Innengewinde an der inneren Umfangswand des Behälters 70 in eine erste An- oder Auflageposition.

Zum Schneiden des sich in dem Aufnahmeraum 84 befindlichen Stoffes wird zunächst der Verschlußdeckel 104 abgenommen und dann mit einer Hand der Behälter 70 und mit der anderen Hand das Griffteil 80 festgehalten. Unter Festhalten des Griffteiles 80 wird sodann der Behälter 70 um seine Längsachse gedreht, wodurch die Gewindeabschnitte an dem Vorschubelement 92 bzw. am inneren Umfang der Behälterwand 71 miteinander in Eingriff gelangen und - eine korrekte Drehrichtung vorausgesetzt - das Vorschubelement 92 nach unten in Richtung auf die Schneideinrichtung 74 bewegt wird, wobei gleichzeitig der zu schneidende Stoff in dem Aufnahmeraum 84 gegen die Scheibe 100 gedrückt wird. Aufgrund der Relativbewegung zwischen der Haltevorrichtung 82 und dem Behälter 70 (erstere wird über das Griffteil 80 festgehalten und letzterer wird gedreht) dreht sich auch die Scheibe 100 gegenüber dem in der gegenüber dem Behälter 70 stillstehenden Haltevorrichtung 82 aufgenommenen Stoff, so daß durch die Schneidklinge 102 der Schneideinrichtung 74 ein entsprechender Materialabtrag unter gleichzeitiger Zustellbewegung des Vorschubelementes 92 erfolgt, bis dieses seine in den Figuren 6 und 7 dargestellte untere Endlage erreicht, in welcher der gesamte sich in dem Aufnahmeraum 84 befindliche Stoff abgegeben worden ist.

Die voranstehend beschriebenen und in der Zeichnung dargestellten Einzelheiten, Aspekte und Bauelemente ergeben sowohl einzeln, als auch in bestimmten Kombinationen wesentliche Vorteile, von denen nachfolgend noch einige angeführt sind, wobei diese Aufstellung als nicht einschränkend zu verstehen ist:

Ist der Behälter 4 im wesentlichen zylindrisch und erstreckt sich hierbei die Antriebswelle 22 im wesentlichen entlang der Längsmittelachse des zylindrischen Behälters 4, so ist der Behälter 4 von seinem Äußeren her, sowie auch von seinem inneren Aufbau her im wesentlichen rotationssymmetrisch und erlaubt somit eine ästhetisch ansprechende und konstruktiv einfache Gestaltung.

Die Schneideinrichtung 8 bzw. 74 ist im Nahbereich einer der Öffnungen (unteres Ende) des zylindrischen Behälters 4 bzw. 70 und zu dieser in den Behälter hinein zurückversetzt angeordnet. Damit stehen keine beweglichen Teile der Schneideinrichtung nach außen hin vor. Dies erhöht zum einen die Betriebssicherheit, zum anderen wird auch das optische Erscheinungsbild verbessert. Darüber hinaus behindert die Schneideinrichtung 8 bzw. 74 das Abstellen der Schneidmaschine mit der die Schneideinrichtung aufweisenden Öffnung nach unten nicht.

Die Schneideinrichtung 8 bzw. 74 ist im wesentlichen durch eine im wesentlichen kreisförmige Scheibe 28 bzw. 100 mit einer sich in Radialrichtung erweiternden Unterbrechung gebildet, wobei eine Schneidklinge 32 bzw. 102 an einer Kante der Unterbrechung ausgebildet ist. Dies stellt eine konstruktiv einfache, aber stabile Ausgestaltung der jeweiligen Schneideinrichtung dar. Durch die Scheibenform ist die Schneideinrichtung in der Lage, neben der Funktion des Messer- oder Klingenträgers auch das untere oder Abgabeende des Behälters 4 bzw. 70 zu verschließen.

Die Schneidklinge 32 bzw. 102 ist zur Ebene der Scheibe 28 bzw. 100 parallel in Richtung Innenraum des Behälters versetzt. Hierdurch und durch die Vorschubeinrichtung 6 bzw. 72 in dem Behälter wird sichergestellt, daß der Schneidklinge stets genügend Material des pastösen Stoffes zur Verfügung steht, also die Schneidklinge nicht über diejenige Fläche des pastösen Stoffes, an welcher der Schneidvorgang stattfinden soll, "schmiert".

Gemäß der ersten Ausgestaltungsform erstreckt sich die Antriebswelle 22 ausgehend von der Schneideinrichtung 8 durch die gesamte Länge des Behälters 4 und aus dem Behälter 4 heraus durch das dortige Deckelelement 14, wobei an dem von dem Deckelelement des Behälters vorstehenden Endabschnitt der Antriebswelle 22 eine Drehhandhabe 26 angeordnet ist. Über diese Drehhandhabe 26 lassen sich Antriebswelle 22 und damit Schneideinrichtung 8 bequem in Drehung versetzen.

Das Vorschubelement 38 ist bei der ersten Ausgestaltungsform im Inneren des Behälters 4 zwischen dem Deckelelement 14 und der Schneideinrichtung 8 angeordnet, wobei das Vorschubelement 38 im wesentlichen plattenförmig ist und die Gewindehülse oder Mutter 42 aufweist oder trägt, welche mit dem Außengewinde 44 auf der Antriebswelle 22 in Eingriff steht. Durch die plattenförmige Ausgestaltung des Vorschubelementes 38 ist es möglich, dieses innerhalb des Behälters 4 ohne größere konstruktive Aufwendungen drehfest anzuordnen, so daß bei einer Drehung der Antriebswelle 22 sich das Vorschubelement 38 nicht gleichsinnig mitdrehen kann, sondern aufgrund seiner drehfesten Lagerung gegenüber dem Gehäuse oder Behälter 4 eine lineare Versetzung entlang der Antriebswelle 22 erfährt, welche durch den Gewindeeingriff zwischen der Gewindehülse oder Mutter 42 seitens des Vorschubelementes mit dem Außengewinde 44 auf der Antriebswelle erzeugt wird. Besonders bevorzugt ist bei beiden Ausführungsformen, also derjenigen mit der mittig durch den Behälter 4 geführten Antriebswelle 22 und derjenigen, bei der die Antriebswelle 70 als Hohlwelle ausgeführt ist und Teil der Behälterwand 71 ist, die Steigung des Gewindeeingriffs zwischen Antriebswelle 22 bzw. 70 und Vorschubelement 38 bzw. 92 derart, daß bei einer vollen Umdrehung der Antriebswelle 22 bzw. 70 das Vorschubelement 38 bzw. 92 eine lineare Versetztung entlang der Antriebswelle erfährt, welche im wesentlichen der Versetzung der Schneidklinge 32 bzw. 102 zur Ebene der Scheibe 28 bzw. 100 parallel in Richtung Innenraum des Behälters 4 bzw. 70 entspricht. Hierdurch ist sichergestellt, daß die bei einer vollen Umdrehung der Antriebswelle von der Schneidklinge der Schneideinrichtung von dem pastösen Stoff abgetragene Teilmenge durch eine gleichzeitige, dieser Abtragsmenge entsprechende Nachstellbewegung seitens des Vorschubelementes 38 bzw. 92 nachgeführt wird, so daß die Schneidklinge stets im Schnitteingriff mit dem pastösen Stoff ist und nicht aufgrund einer zu geringen Nachfuhr- oder Förderrate seitens der Vorschubeinrichtung leer ohne Abtrag durchläuft oder "schmiert". Auch der gegenteilige Effekt, das heißt ein zu starker Förderbetrag seitens der Vorschubeinrichtung, was zu einem unsauberen Schnitt der Schneideinrichtung führen würde, wird hierdurch vermieden.

Der Innenraum des Behälters 4 bzw. 70 weist die Haltemittel 46 bzw. 82 zur Lagerung von handelsüblich konfektionierten Mengeneinheiten des pastösen Stoffes auf, so daß sichergestellt wird, daß sich der pastöse Stoff nach einer bestimmten Zeitdauer nicht innerhalb des Behälters bei einer Drehung der Antriebswelle 22 bzw. 70 mitdreht und somit ein Abtrag durch die Schneideinrichtung unmöglich wird. Sind die Haltemittel hierbei so ausgebildet (dimensioniert und/oder beabstandet), daß sie zur Lagerung von handelsüblich konfektionierten Mengeneinheiten des pastösen Stoffes geeignet sind, läßt sich der pastöse Stoff, beispielsweise Butter, in handelsüblicher Block- oder Rollenform nach erfolgtem Auspacken ohne irgendwelche weiteren Umformmaßnahmen direkt in den Behälter 4 bzw. 70 bzw. die dortigen Haltemittel einlegen oder -setzen.

Die Scheibe 28 bzw. 100 der Schneideinrichtung 8 bzw. 74 ist von der Antriebswelle 22 bzw. dem als Antriebs-Hohlwelle wirkenden Behälter 70 abnehmbar, wodurch Austausch und/oder Reinigung der Scheibe erleichtert sind.

Läßt sich darüber hinaus auch das Deckelelement 14 bzw. 76 von dem Behälter 4 bzw. 70 abnehmen, so läßt sich der zu schneidende pastöse Stoff bei der ersten Ausführungsform in einfacher Weise von oben her in den Behälter einfüllen. Bei der zweiten Ausführungsform wird durch Entnahme der gesamten Haltevorrichtung 82 aus dem Behälter 70 (gegebenenfalls unter Austausch gegen eine andere Haltevorrichtung mit einem Aufnahmeraum 84 anderer Größe und/oder Form) der zu schneidende pastöse Stoff besonders einfach und sauber einbringbar. Auch wird die Reinigung der gesamten Schneidmaschine hierdurch erleichtert.

Bei der ersten Ausführungsform wird das zylindrische Gehäuse 4 an dem Endabschnitt 12 glockenförmig aufgeweitet, wobei die Schneideinrichtung 8 in diesem aufgeweiteten Endabschnitt angeordnet ist. Hierdurch wird dem gesamten Behälter 4 und damit der gesamten Schneidmaschine eine größere Standfläche mit erhöhter Standfestigkeit zur Verfügung gestellt.

Ist axial außerhalb der Schneideinrichtung 8 in dem aufgeweiteten Endabschnitt 12 eine scheibensegmentförmige Abdeckung 60 im Abstand zur Schneideinrichtung 8 angeordnet, welche das axial außerhalb der Schneideinrichtung liegende offene Ende des Behälters annähernd zur Hälfte überdeckt, wird der vorteilhafte Effekt erhalten, daß sich zusätzliche, den Schneide- oder Abgebevorgang unterstützende Elemente vorsehen lassen, so beispielsweise die Abstreifklinge.

Das Vorschubelement 38 bzw. 92 ist in jedem Fall gegen- über der Haltevorrichtung 46 bzw. 82 axial beweglich, jedoch drehfest geführt. Hierdurch wird eine sichere Zustellbewegung des Stoffes in Richtung der Schneideinrichtung 8 bzw. 74 gewährleistet.

Hat gemäß der zweiten Ausführungsform das Vorschubelement 92 ein Außengewinde, welches mit einem Innengewinde an der inneren Umfangswand des Behälters 70 oder am Innenumfang dessen Behälterwand 71 in Eingriff steht, sind vergleichsweise große Gewindeabschnitte und eine entsprechend saubere und kraftvolle Führung gewährleistet, auch dann, wenn die Gewindesteigung zur Erzielung einer geringen Zustellrate des Vorschubelements 92 entsprechend klein gewählt wird.

Ist gemäß der zweiten Ausführungsform die Scheibe 100 der Schneideinrichtung 74 drehfest an dem Behälter 70 angeordnet und wird durch dessen Drehung selbst in Drehung versetzt, lassen sich aufgrund des vergleichsweise großen Außendurchmessers des Behälters 70 entsprechénd hohe Drehmomente und damit Schnittkräfte erzielen, was beispielsweise beim Schneiden von Hartkäse oder stark gekühlter Butter vorteilhaft ist.

Beschrieben wurde eine Schneidmaschine für pastöse Stoffe wie Butter oder dergl., mit einem Behälter zur Aufnahme des Stoffes, einer Vorschubeinrichtung zur Bewegung des Stoffes und einer Schneideinrichtung zum Abtrennen einer Teilmenge von dem durch die Vorschubeinrichtung aus dem Behälter verdrängten Stoff, bei der eine mit der Schneideinrichtung mittelbar oder unmittelbar verbundenen Antriebswelle in den Behälter hineinragt und ein Außengewinde aufweist, das in Gewindeeingriff mit einem auf den Stoff wirkenden Vorschubelement der Vorschubeinrichtung steht.

## Patentansprüche

1. Schneidmaschine für pastöse Stoffe wie Butter oder dergl., mit einem Behälter (4; 70) zur Aufnahme des Stoffes, einer Vorschubeinrichtung (6; 72) zur Bewegung des Stoffes und einer Schneideinrichtung (8; 74) zum Abtrennen einer Teilmenge von dem durch die Vorschubeinrichtung (6; 72) aus dem Behälter (4; 70) verdrängten Stoff,
gekennzeichnet durch
eine mit der Schneideinrichtung (8; 74) mittelbar oder unmittelbar verbundene Antriebswelle (22; 70), die in den Behälter (4; 70) hineinragt oder einen Teil der Behälterwandung (71) bildet und ein Gewinde (44) aufweist, das in Eingriff mit einem auf den Stoff wirkenden Vorschubelement (38; 92) der Vorschubeinrichtung (6; 72) steht.

2. Schneidmaschine nach Anspruch 1, dadurch gekennzeichnet, daß die Antriebswelle (22) sich ausgehend von der Schneideinrichtung (8) durch die gesamte Länge des Behälters (4) und aus dem Behälter (4) heraus durch ein dortiges Deckelelement (14) erstreckt, wobei an dem von dem Deckelelement (14) des Behälters (4) vorstehenden Endabschnitt der Antriebswelle (22) eine Drehhandhabe (26) angeordnet ist.

3. Schneidmaschine nach Anspruch 1 oder 2, dadurch gekennzeichnet, daß ein Vorschubelement (38) der Vorschubeinrichtung (6) im wesentlichen rechteck-plattenförmig ist und eine Gewindehülse oder Mutter (42) aufweist oder trägt, welche mit einem Außengewinde (44) auf der Antriebswelle (22) in Eingriff steht.

4. Schneidmaschine nach einem der Ansprüche 1 bis 3, dadurch gekennzeichnet, daß die Schneideinrichtung (8; 74) eine im wesentlichen kreisförmige Scheibe (28; 100) mit einer sich in Radialrichtung keilförmig erweiternden Unter-brechung (30) ist, wobei eine Schneidklinge (32; 102) an einer Kante der Unterbrechung (30) ausgebildet ist.

5. Schneidmaschine nach Anspruch 3, dadurch gekennzeichnet, daß die Steigung des Gewindeeingriffs zwischen Antriebswelle (22; 70) und Vorschubelement (38; 92) derart ist, daß bei einer vollen Umdrehung der Antriebswelle (22; 70) das Vorschubelement (38; 92) eine lineare Versetzung entlang der Antriebswelle (22; 70) erfährt, welche im wesentlichen dem Stoffabtrag durch die Schneidklinge (32; 102) der Schneideinrichtung (8; 74) entspricht.

6. Schneidmaschine nach einem der Ansprüche 1 bis 5, dadurch gekennzeichnet, daß axial außerhalb der Schneideinrichtung (8) eine scheibensegmentförmige Abdeckung (60) im Abstand zur Schneideinrichtung (8) angeordnet ist, welche das axial außerhalb der Schneideinrichtung (8) liegende offene Ende des Behälters (4) annähernd zur Hälfte abdeckt.

7. Schneidmaschine nach Anspruch 6, dadurch gekennzeichnet, daß die Abdeckung (60) eine Abstreifklinge (64) trägt, welche mit der zur Außenseite des Behälters (4) weisenden Oberfläche der Scheibe (28) in federnder Gleitanlage ist.

8. Schneidmaschine nach einem der Ansprüche 1 bis 7, dadurch gekennzeichnet, daß der Innenraum des Behälters (4; 70) Haltemittel (46; 82, 84) zur Lagerung von handelsüblich konfektionierten Mengeneinheiten des pastösen Stoffes aufweist.

9. Schneidmaschine nach Anspruch 1, gekennzeichnet durch eine in dem Behälter (70) angeordnete Haltevorrichtung (82) zur gegenüber dem Behälter (70) drehfesten Aufnahme von handelsüblich konfektionierten Mengeneinheiten des pastösen Stoffes, wobei ein auf den Stoff wirkendes Vorschubelement (92) der Vorschubeinrichtung (72) ebenfalls gegenüber dem Behälter (70) drehfest angeordnet ist und mit diesem direkt oder indirekt in Gewindeeingriff steht, und ein Griffteil (80) von der Haltevorrichtung (82) aus dem Behälterinnenraum vorsteht.

10. Schneidmaschine nach Anspruch 9, dadurch gekennzeichnet, daß das Vorschubelement (92) in der Haltevorrichtung (82) axial beweglich, jedoch drehfest geführt ist.

11. Schneidmaschine nach Anspruch 10, dadurch gekennzeichnet, daß das Vorschubelement (92) ein Außengewinde aufweist, welches mit einem Innengewinde an der inneren Umfangswand des Behälters (70) in Eingriff steht.

12. Schneidmaschine nach einem der Ansprüche 9 bis 11, dadurch gekennzeichnet, daß die Schneideinrichtung (74) mit dem Behälter (70) drehfest verbunden ist.
